# EUROPEAN PATENT APPLICATION

(11) **EP 3 344 015 A1**
(43) Date of publication of application: **04.07.2018**
(21) Application number: 16838736.3
(22) Date of filing: 05.07.2016
(51) Int. Cl.: H05B 37/02, G03B 21/00, G03B 21/14

(54) **ILLUMINATION SYSTEM AND PROGRAM**

(30) Priority: 26.08.2015 JP 2015167255
(71) Applicant: Panasonic Intellectual Property Management Co., Ltd., Osaka-shi, Osaka 540-6207 (JP)
(72) Inventor: MIICHI, Nobuhiro, Osaka-shi, Osaka 540-6207 (JP)
(74) Representative: Appelt, Christian W.
(86) International application number: PCT/JP2016/003198
(87) International publication number: WO 2017/033384

(57) **Abstract**

A lighting system (1) includes: a video projector (10) which projects a video image onto a projection surface (2); an image sensor (20) which defines a region including the projection surface (2), as an image capture region, and captures an image of the image capture region; and a color corrector (31) which performs color correction of the video image to be projected by the video projector (10), using statistics related to RGB of a target region which is at least a part of the image capture region, based on the image captured by the image sensor (20).

## Description

### TECHNICAL FIELD

The present invention relates to a lighting system and a program for use in the lighting system.

### BACKGROUND ART

Semiconductor light-emitting elements such as light emitting diodes (LEDs) and laser diodes (LDs) are expected, for their long product life and low power consumption, to serve as the light sources of various products.

In recent years, projector light sources have faced a transition period in which lamps are replaced by semiconductor light-emitting elements. Thus, the projector light sources are becoming long-lasting and power saving. Accordingly, the usage of projectors intended not only for video projection but also for lighting has been considered.

Meanwhile, the semiconductor light-emitting elements such as LEDs are also used as the light sources of lighting apparatuses, and the usage of the lighting apparatuses intended not only for lighting but also for video projection is also under consideration. For example, Patent Literature (PTL) 1 discloses a lighting apparatus having a lighting function and a video projection function.

Therefore, the use of the video projection technology such that applied to projectors or the like is expected to grow in the future in the lighting industry providing lighting in stores, residential houses, etc.

### Citation List

### Patent Literature

PTL1: Japanese Unexamined Patent Application Publication No. 2006-127845

### SUMMARY OF THE INVENTION

### TECHNICAL PROBLEM

Generally speaking, when a projector is used in a room such as a conference room, video images are projected on a projection surface such as a screen, in the condition where a lighting apparatus installed in a ceiling or the like is turned off so that the visibility of the projected images can be enhanced. In other words, the images are projected in the condition where the lighting of the room is dimmed.

On the other hand, when a projector is used in a store or in a residential house, video images are projected in bright conditions, which is different from the general case of using a projector in a conference room or the like. For example, the video images are projected on a projection surface in the condition where a lighting apparatus installed in a ceiling or the like is turned on or in the condition where a room is illuminated by natural light such as the sunlight.

The problem, however, is that when video images are projected in bright conditions, they are projected with poor visibility.

The present invention was conceived to overcome the above-described problem, and has an object to provide the lighting system and program which allow the projection of video images that appear natural and have improved visibility even in bright conditions.

### SOLUTION TO PROBLEM

In order to achieve the above-described object, one aspect of the lighting system according to the present invention is a lighting system including: a video projector which projects a video image on a projection surface; an image sensor which defines a region including the projection surface, as an image capture region, and captures an image of the image capture region; and a color corrector which performs color correction of the video image to be projected by the video projector, using statistics related to RGB of a target region which is at least a part of the image capture region, based on the image captured by the image sensor.

Note that the present invention can be realized as a program for causing a computer to function as the above-described lighting system or as a computer-readable storage medium that stores the program.

### ADVANTAGEOUS EFFECT OF INVENTION

It is possible to project video images that appear natural and have improved visibility even in bright conditions.

### BRIEF DESCRIPTION OF DRAWINGS

FIG. 1 schematically illustrates a specific example of the application of a lighting system according to Embodiment 1;
FIG. 2 illustrates a schematic structure of the lighting system according to Embodiment 1, and an example of an image captured in that system;
FIG. 3 is a block diagram illustrating a configuration of the lighting system according to Embodiment 1;
FIG. 4 illustrates an example of an image captured in a lighting system according to Variation 1 of Embodiment 1;
FIG. 5 illustrates an example of an image captured in a lighting system according to Variation 2 of Embodiment 1;
FIG. 6 illustrates an example of an image captured in a lighting system according to Variation 3 of Embodiment 1;
FIG. 7 illustrates an example of an image captured in a lighting system according to Variation 4 of Embodiment 1;
FIG. 8 illustrates an example of an image captured in a lighting system according to Variation 5 of Embodiment 1;
FIG. 9 schematically illustrates a specific example of the application of a lighting system according to Embodiment 2;
FIG. 10 illustrates a schematic structure of the lighting system according to Embodiment 2, and an example of an image captured in that system; and
FIG. 11 is a block diagram illustrating a configuration of the lighting system according to Embodiment 2.

### DESCRIPTION OF EXEMPLARY EMBODIMENTS

Hereinafter, exemplary embodiments of the present invention will be described. Note that the subsequently-described exemplary embodiments show specific examples of the present invention. Therefore, the numerical values, structural components, the arrangement and connection of the elements as well as steps and the sequence of the steps, etc. shown in the following embodiments are mere examples, and are not intended to limit the scope of the present invention. Moreover, among the structural components in the following embodiments, components not recited in any one of the independent claims which indicate the broadest concepts of the present invention are described as arbitrary structural components.

Furthermore, the respective figures are schematic diagrams and are not necessarily precise illustrations. Note that, in the respective figures, substantially identical components are assigned the same reference signs, and overlapping description is omitted or simplified.

### EMBODIMENTS

### EMBODIMENT 1

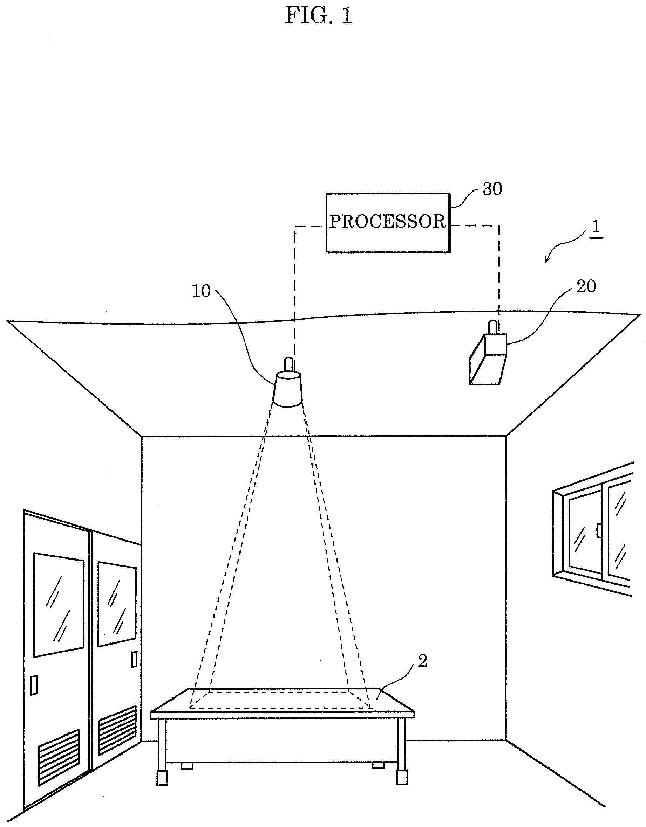

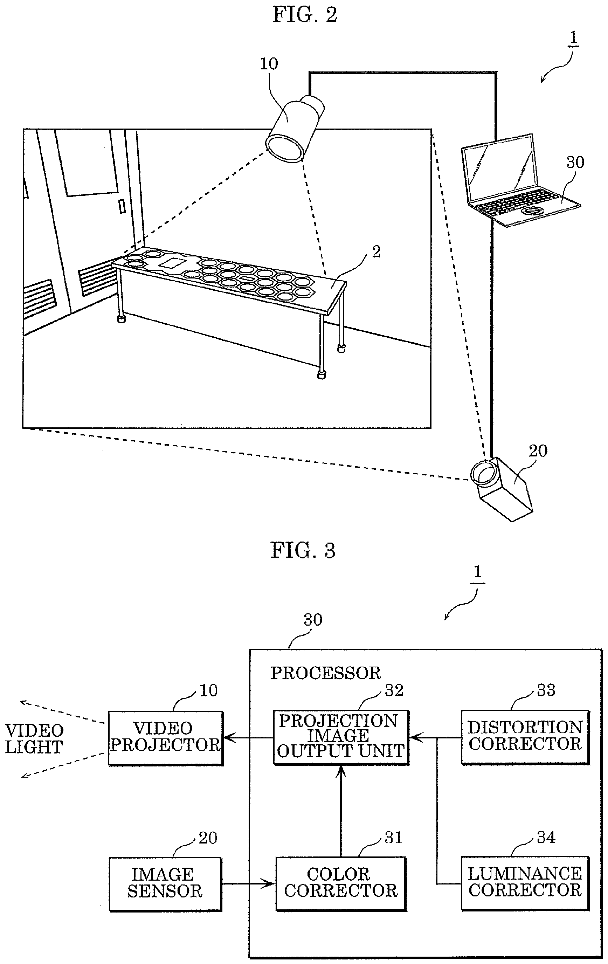

Lighting system 1 according to Embodiment 1 will be described with reference to FIG. 1 to FIG. 3. FIG. 1 schematically illustrates a specific example of the application of lighting system 1 according to Embodiment 1. FIG. 2 illustrates a schematic structure of lighting system 1, and an example of an image captured in lighting system 1. FIG. 3 is a block diagram illustrating a configuration of lighting system 1.

As illustrated in FIG. 1 to FIG. 3, lighting system 1 includes video projector 10, image sensor 20, and processor 30.

The present exemplary embodiment describes the case where lighting system 1 is used indoors such as in a store or in a residential house. As illustrated in FIG. 1, video projector 10 and image sensor 20 are installed, for example, inside a room. To be more specific, video projector 10 and image sensor 20 are installed, for example, in the ceiling of the room. However, the installation locations of video projector 10 and image sensor 20 are not limited to this.

Note that although video projector 10 and image sensor 20 are installed in different locations, and thereby the viewing points of video projector 10 and image sensor 20 are different, they may be installed in the same location. In this case, video projector 10 and image sensor 20 may configure one apparatus and provide the same view point.

Video projector 10 is a video projecting device which projects video images onto projection surface 2. In the present exemplary embodiment, video projector 10 projects the video images in bright conditions such as the condition where a lighting apparatus (not shown) installed in the ceiling or the like is turned on or the condition where the room is illuminated by natural light such as the sunlight entering the room. This means that the video images from video projector 10 are projected onto projection surface 2 in bright conditions.

Projection surface 2 onto which the video images from video projector 10 are projected may be either flat or three-dimensional surface, including any sorts of structures or animals and plants. As illustrated in FIG. 1 and FIG. 2, projection surface 2 according to the present exemplary embodiment is the surface of the desk placed in the room. For example, a video image presenting a honeycomb pattern (lighting pattern) is projected by video projector 10 onto projection surface 2. Note that projection surface 2 is not limited to the surface of a desk, and it may be the surface of a wall or floor, or a screen, etc.

Video projector 10 has a light source such as a semiconductor laser or a lamp, an optical system such as lenses and mirrors, a display device such as a liquid crystal display, projection lenses, and so on. For example, when a video image to be projected on projection surface 2 is input from processor 30 to video projector 10, the video image is projected from the projection lenses of video projector 10 towards projection surface 2. Note that, in the present description, the term "video image (or image)" may be referred to as either a still image or a moving picture.

In the present exemplary embodiment, video projector 10 has not only a function to project video images but also a function to emit illumination light onto projection surface 2. In other words, video projector 10 can project video images (lighting pattern) as illumination light.

Thus, video projector 10 is a light-projecting device which projects both video light (video image) and illumination light. With such function, video projector 10 is capable of producing lighting effects as well as visual effects. In this case, the video light and the illumination light may be projected so that these lights are temporally and spatially superimposed or may be projected so that the lights are switched at different timings. In the former case, video images are projected from video projector 10 in such a manner that the video light and the illumination light are superimposed. Note that the light source for illumination light and the light source for video light may be the same or different. Moreover, video projector 10 may have dimming and toning functions so that the brightness or color components of the illumination light to be projected can be changed.

Image sensor 20 is an imaging device, such as a camera, which defines a region including projection surface 2, as an image capture region, and captures an image of the image capture region. This means that the image (captured image) captured by image sensor 20 includes projection surface 2. Image sensor 20 may define a region including projection surface 2, as the image capture region, before video projector projects a video image, or may define a region including the video image projected by video projector 10, as the image capture region, and capture an image of the image capture region.

Image sensor 20 has, for example, an imaging device such as a CCD image sensor or a CMOS image sensor, and an optical system or the like. The image (image data) captured by image sensor 20 is transmitted to processor 30.

Processor 30 is a processing device having a function to perform various arithmetic operations. Processor 30 has color corrector 31, projection image output unit 32, distortion corrector 33, and luminance corrector 34.

Moreover, processor 30 also has a function to transmit and receive signals to and from video projector 10 and image sensor 20. In other words, processor 30 has a communication unit such as an interface. The transmission and reception of the signals between processor 30 and video projector 10 or image sensor 20 may be performed in a wired or wireless manner. As illustrated in FIG. 2, a personal computer (PC) can be used, for example, as processor 30. In this case, it is possible to connect processor 30 and video projector 10 via an HDMI (registered trademark) cable, for example, and connect processor 30 and image sensor 20 via a USB cable, for example.

Color corrector 31 performs color correction of a video image (projection image) to be projected by video projector 10, using the statistics related to RGB of a target region which is at least a part of an image capture region, based on an image captured by image sensor 20.

To be more specific, color corrector 31 obtains the image captured by image sensor 20, calculates the statistics related to RGB of the captured image by analyzing the captured image obtained. In addition, color corrector 31 obtains correction coefficients with respect to the video image to be projected by video projector 10, using the calculated statistics related to RGB, and performs the color correction of the video image, according to the obtained correction coefficients. As an example, color corrector 31 performs color correction so that the color of the video image projected on projection surface 2 by video projector 10 appears similar to an input video image (original video image) of the projected image.

For example, color corrector 31 calculates, as statistics related to RGB, RGB average (average values of R, G, and B) of an entire image captured by image sensor 20, based on the RGB component (RGB signal) of each pixel in the captured image. Color corrector 31 then obtains the hue of the image by performing RGB-HSV (or RGB-HSB) conversion onto the RGB average, and obtains correction coefficients by adjusting the white balance of the projection image to accord with the obtained hue. More specifically, the gain (saturation) of the complementary color component of the obtained hue is increased. Note that statistics related to RGB shall not be limited to RGB average and median or mode values of RGB values may be used instead.

Moreover, color corrector 31 may calculate statistics related to RGB based on an image captured by image sensor 20 either in advance before video projector 10 projects video images, or in the state where video projector 10 is projecting the video images.

Note that RGB represents the three primary colors of light, that is, red (R), green (G), and blue (B), whereas HSV (or HSB) represents the three elements of color, that is, hue (H), saturation (S), and value (V) or brightness (B).

Projection image output unit 32 outputs, to video projector 10, a video image to be projected by video projector 10. Projection image output unit 32 is capable of outputting a video image whose color has been or has not been corrected by color corrector 31. Note that processor 30 may have functions to play and stop the video image outputted to video projector 10.

Distortion corrector 33 corrects the distortion of a video image to be projected. Distortion corrector 33 corrects, for example, the geometric distortion (trapezoid distortion) of the video image to be projected by video projector 10.

Luminance corrector 34 corrects the luminance of a video image to be projected. Luminance corrector 34 corrects, for example, a whole or part of the luminance of the video image to be projected by video projector 10.

Note that processor 30 may have a storage (memory). The storage stores the data processed or calculated by processor 30 or the video image (video content) outputted from projection video output unit 32 to video projector 10. In addition, the storage is also used for the control processing performed by processor 30. The storage serves, for example, as a work area for color corrector 31 and others to perform various data processing and arithmetic operations, and stores data when necessary. Moreover, an application program or the like for controlling video projector 10 and image sensor 20 may be stored in the storage.

Furthermore, processor 30 may have an image obtainer (an image input unit) which obtains a video image to be projected by video projector 10. The image obtainer obtains, as an input video image, the video image to be projected by video projector 10. The input video image may be obtained from a storage medium such as an SD card detachably attached to processor 30, from an external device either via a communication line such as an HDMI (registered trademark) cable connected to processor 30 or using a wireless communication such as Wi-Fi.

As has been described above, in lighting system 1 according to the present exemplary embodiment, image sensor 20 defines a region including projection surface 2, as an image capture region, and captures an image of the image capture region, and color corrector 31 performs the color correction of the video image to be projected by video projector 10, using the statistics related to RGB of a target region which is at least a part of the image capture region, based on the image captured by image sensor 20. In other words, in lighting system 1, projection surface 2 and its vicinity are captured in advance by image sensor 20, the correction coefficients of the projection image are obtained based on the color and brightness of the surrounding area of projection surface 2, and the image corrected according to the obtained correction coefficients is projected. In the present exemplary embodiment, a video image to be projected is corrected based on the colors and brightnesses of, for example, the wall, floor, and door in the surroundings of projection surface 2.

Thus, in lighting system 1 according to the present exemplary embodiment, the color and brightness of the space in which video images are projected are taken into consideration, and thus the video images corrected to appear more natural are projected. This enables the emphasis on the part that needs to be emphasized as well as the control of color and brightness of ambient light to the extent that an intended object of the ambient light of a lighting apparatus, for example, is not lost. Therefore, it is possible to project video images that appear natural and have improved visibility even in bright conditions.

Moreover, in the present exemplary embodiment, color corrector 31 may define a region, in the image capture region captured by image sensor 20, excluding projection surface 2 on which a video image is projected, as a target region, calculate the statistics related to RGB of the target region, and perform color correction of the video image to be projected by video projector 10, using the statistics calculated.

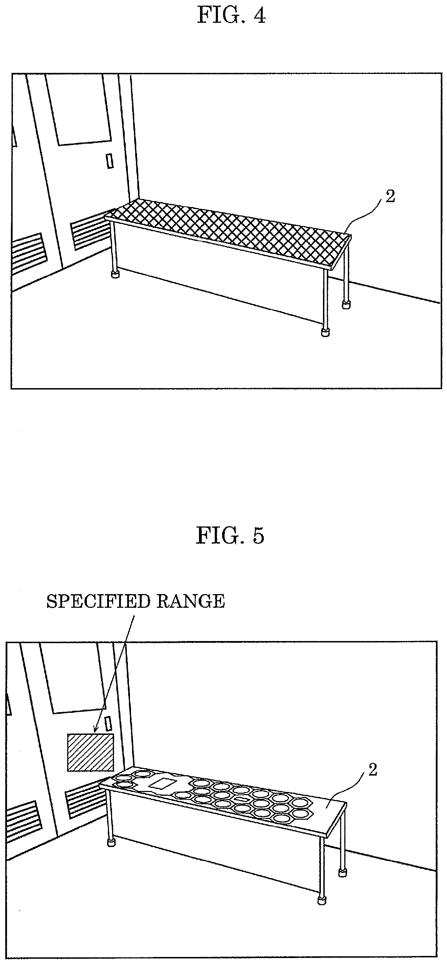

For example, as illustrated in FIG. 4, when processor 30 analyzes the image captured by image sensor 20, color corrector 31 performs mask processing onto projection surface 2, calculates the statistics related to RGB of the captured image and thereby obtains the correction coefficients with respect to the video image to be projected by video projector 10, and performs the color correction of the projection image according to the correction coefficients obtained. This means that, color corrector 31 calculates the statistics related to RGB of the region by analyzing a region, in the captured image, excluding projection surface 2. Note that, in the captured image illustrated in FIG. 4, the region indicated by cross-hatching is the region where mask processing is performed.

By thus calculating the statistics related to RGB of the region excluding projection surface 2 in the captured image, it is possible to perform color correction of the video image to be projected, without being affected by projection surface 2. This enables the projection of video images with improved visibility. Note that the region of projection surface 2 in the captured image may be specified by the user based on the captured image or may be specified by calculation, such as 3D measurement or the like, based on the captured image obtained through the on/off operation by video projector 10.

Moreover, in the present exemplary embodiment, color corrector 31 may define, as a target region, only a region of a specified range in the image capture region captured by image sensor 20, calculate the statistics related to RGB of the target region, and perform the color correction of the video image to be projected by video projector 10, using the statistics calculated.

For example, in FIG. 5, when processor 30 defines the rectangular region indicated by diagonal hatching as a specified range and analyzes the image captured by image sensor 20, color corrector 31 calculates statistics related to RGB exclusively with regard to the region specified by the user and thereby obtains the correction coefficients with respect to the video image to be projected by video projector 10, and performs the color correction of the projection image according to the correction coefficients obtained.

This enables the projection of video images with improved visibility, using a specified range as reference. Note that although a part of the door is indicated as the specified range in FIG. 5, the specified range shall not be limited to this and a floor, a wall, or the like may be defined as the specified range. In addition, the specified range shall not always be specified by the user and it may be automatically selected by a computer or may be a predetermined region that has been set in advance.

Moreover, in the present exemplary embodiment, color corrector 31 may compare the statistics related to RGB in the image capture region captured by image sensor 20 between projection surface 2 and the region excluding projection surface 2, and perform the color correction of the video image to be projected by video projector 10.

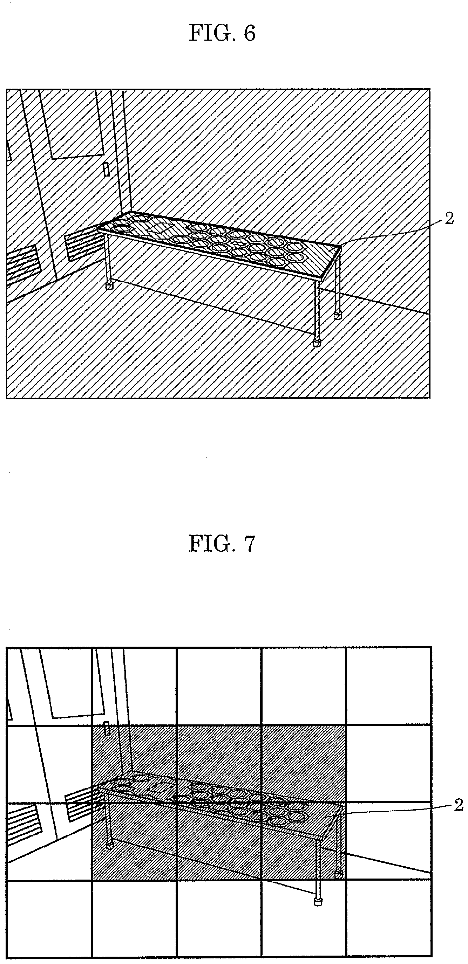

For example, as illustrated in FIG. 6, when processor 30 analyzes the image captured by image sensor 20, color corrector 31 calculates, in the captured image, both the first statistics related to RGB of the region of projection surface 2 (the region indicated by diagonal hatching with the right side down) and the second statistics related to RGB of the region excluding projection surface 2 (the region indicated by diagonal hatching with the right side up). Then, color corrector 31 obtains the correction coefficients with respect to the video image to be projected by video projector 10 by comparing the calculated statistics between the first statistics and the second statistics, and thereby, and performs the color correction of the projection image according to the correction coefficients obtained.

As an example, the case of obtaining RGB average as statistics related to RGB for the region of projection surface 2 and the region excluding projection surface 2, respectively, will be described below. In this case, the calculated RGB average (R₁, G₁, B₁) of the region corresponding to projection surface 2 is normalized to satisfy G₁=1 so that (R₁₀, 1, B₁₀) is obtained. Similarly, the RGB average (R₂, G₂, B₂) of the region corresponding to the region excluding projection surface 2 is normalized to satisfy G₂=1 so that (R₂₀, 1, B₂₀) is obtained. Then, R component is multiplied by (R₂₀/ R₁₀) as a correction coefficient and B component is multiplied by (B₂₀/ B₁₀) as a correction coefficient, so that the video image thus corrected is projected.

This enables the projection of video images with improved visibility, without any influence due to the color difference between the region of projection surface 2 and the region excluding projection surface 2. For example, when the surroundings of projection surface 2 is more yellowish than projection surface 2, by projecting the video images that have been corrected to appear yellowish, it is possible to project video images appearing more natural.

In addition, in the present exemplary embodiment, color corrector 31 may divide the image capture region captured by image sensor 20 into small regions, and obtain the correction coefficients of the projection image based on the analysis of the small regions. In this case, color corrector 31 calculates the statistics related to RGB of a target region by weighting the small regions in an order starting from the small regions close to projection surface 2 towards the small regions distant from projection surface 2. Thus, color corrector 31 can perform color correction of the video image to be projected by video projector 10, using the statistics calculated.

For example, as illustrated in FIG. 7, when processor 30 analyzes the image captured by image sensor 20, color corrector 31 divides the captured image into plural blocks (small regions) in a matrix, calculates RGB average (statistics related to RGB) for all the blocks by giving more weight to the blocks of the region including projection surface 2 (the region indicated by diagonal hatching). Color corrector 31 thus obtains correction coefficients with respect to the video image to be projected by video projector 10, and performs the color correction of the projection image according to the correction coefficients obtained.

This enables the projection of video images with improved visibility in such a manner that the color of each image is adjusted to the color of the surroundings. Note that the blocks may be weighted according to the brightness of the blocks instead of the distance from projection surface 2.

In addition, in the present exemplary embodiment, color corrector 31 may divide the image capture region captured by image sensor 20 into small regions, and obtain the correction coefficients of a projection image based on the analysis of each of the small regions. In this case, color corrector 31 is capable of performing color correction of the video image to be projected by video projector 10, using a maximum cluster obtained by the cluster analysis based on the statistics related to RGB of the respective small regions.

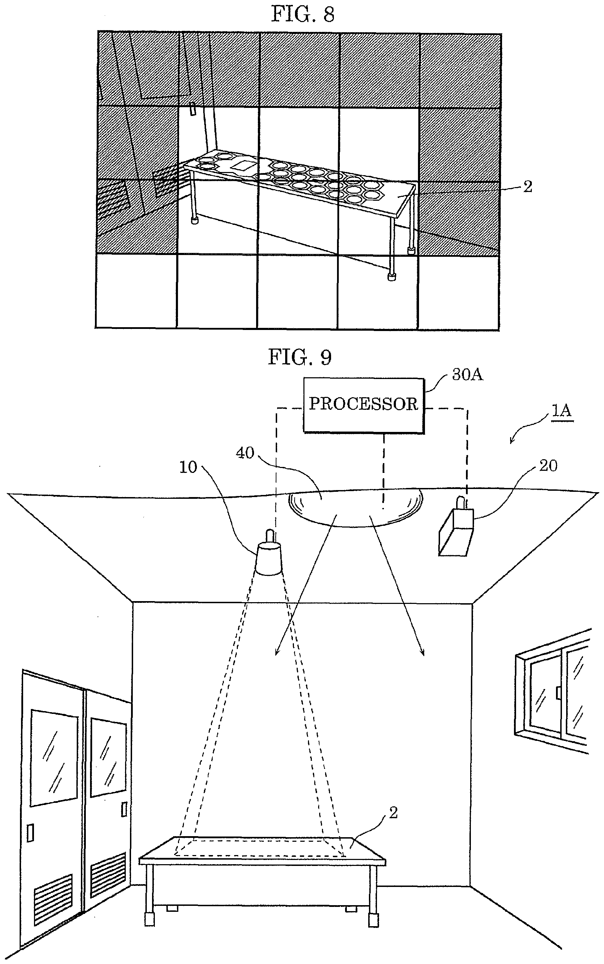

For example, as illustrated in FIG. 8, when processor 30 analyzes the image captured by image sensor 20, color corrector 31 divides the captured image into blocks (small regions) in a matrix, calculates RGB average (statistics related to RGB) per block, collects the similar blocks through the clustering, and thereby obtains a maximum cluster. Then, color corrector 31 obtains correction coefficients with respect to the video image to be projected by video projector 10, using the maximum cluster as reference, and performs the color correction of the projection image according to the correction coefficients obtained.

Accordingly, although incapable of discerning that a wall or a floor is included in the captured image, the viewer can discern that each of the blocks is, for example, greenish or yellowish. Therefore, it is possible to project video images with improved visibility in such a manner that the color of the captured image is better adjusted to the color of the surroundings.

Moreover, lighting system 1 according to the present exemplary embodiment includes distortion corrector 33 which corrects the distortion of a video image to be projected and luminance corrector 34 which corrects the luminance of the video image.

This enables the distortion and luminance corrections of the video images to be projected by video projector 10, therefore, it is possible to project the video images with more improved visibility.

Note that, in the present exemplary embodiment, the shape of the small regions (blocks) obtained by dividing the image captured by image sensor 20 into plural sections is square, but the shape shall not be limited to this.

### EMBODIMENT 2

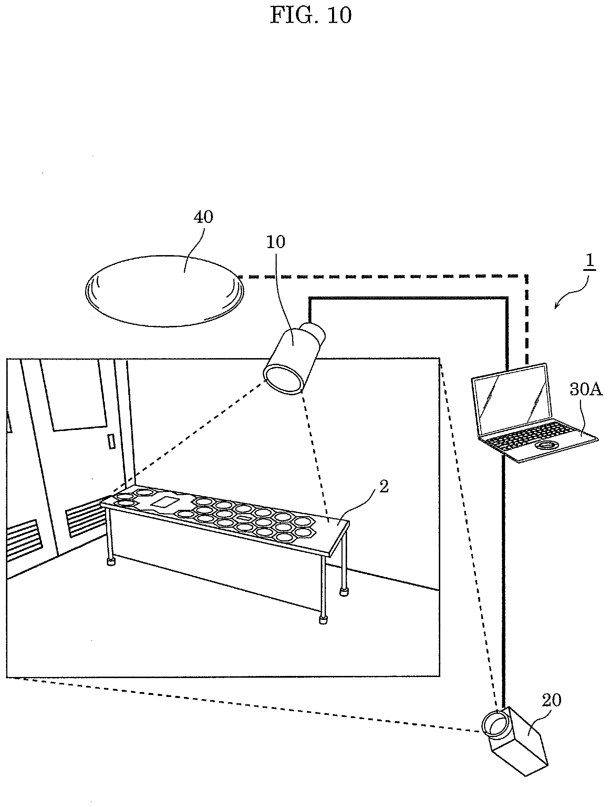

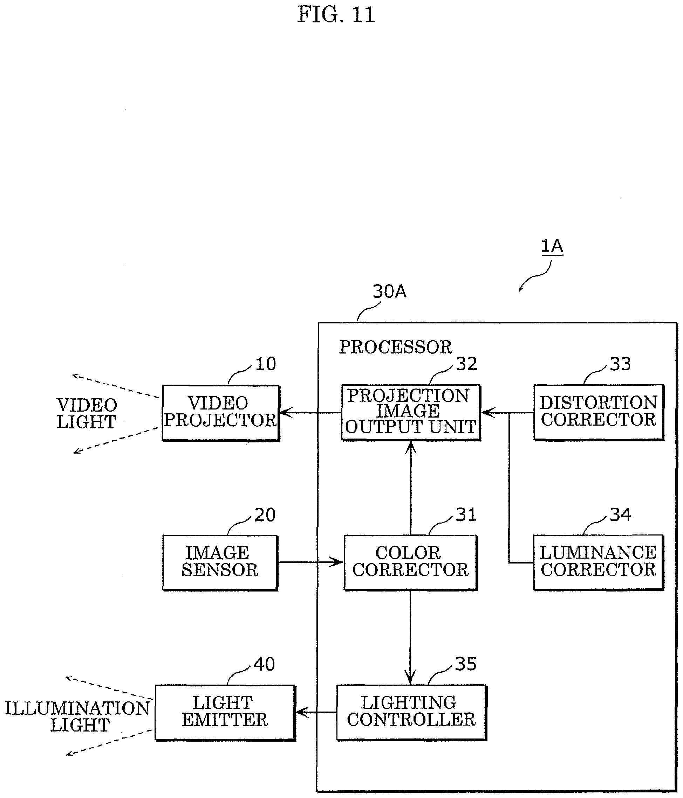

Next, lighting system 1A according to Embodiment 2 will be described with reference to FIG. 9 to FIG. 11. FIG. 9 schematically illustrates a specific example of the application of lighting system 1A according to Embodiment 2. FIG. 10 illustrates a schematic structure of lighting system 1A, and an example of an image captured in lighting system 1A. FIG. 11 is a block diagram illustrating a configuration of lighting system 1A.

As illustrated in FIG. 9 to FIG. 11, lighting system 1A includes video projector 10, image sensor 20, processor 30A, and light emitter 40.

Lighting system 1A according to the present exemplary embodiment further includes lighting controller 35 and light emitter 40 in addition to the configuration of lighting system 1 according to Embodiment 1. For example, processor 30A has lighting controller 35. Unlike processor 30 in lighting system 1 according to Embodiment 1, processor 30A has lighting controller 35.

Lighting controller 35 controls light emitter 40. In the present exemplary embodiment, lighting controller 35 causes light emitter 40 to emit illumination light having a color complementary to the hue calculated by color corrector 31. Lighting controller 35 transmits, to light emitter 40, a control signal for controlling light emitter 40.

Light emitter 40 is a lighting apparatus which emits illumination light, and is, for example, a ceiling light or a downlight installed in the ceiling of a room. Note that light emitter 40 may be a spot light installed on the wall surface of a room. Light emitter 40 emits illumination light onto projection surface 2.

Light emitter 40 has a light source such as an LED or a lamp. Light emitter 40 has a light source that is different from that of video projector 10. In other words, light emitter 40 emits illumination light using the light source different from that of video projector 10. The illumination light of light emitter 40 is, for example, white light but the color of the light shall not be limited to white.

In the present exemplary embodiment, light emitter 40 has red, green, and blue light sources, and is capable of RGB control. Namely, the red, green, and blue light sources can be controlled independently. These light sources may be LED or existing lamp light sources.

In addition, light emitter 40 has dimming and toning functions and is configured to control at least one of brightness and chrominance of illumination light. For example, light emitter 40 can increase or decrease the light output of the illumination light based on the control signal from lighting controller 35 of processor 30A. In addition, light emitter 40 can selectively increase or decrease at least one of red, green, and blue components of the illumination light based on the control signal from lighting controller 35.

Light emitter 40 thus configured is controlled based on the control signal transmitted from lighting controller 35. In the present exemplary embodiment, light emitter 40 emits illumination light having a color complementary to the hue obtained by converting the statistics related to RGB to be used for the color correction performed by color corrector 31.

In lighting system 1A, color corrector 31, for example, calculates RGB average, as the statistics related to RGB, of an entire image captured by image sensor 20 based on the RGB components of each pixel in the captured image, and obtains the hue of the captured image by performing RGB-HSV conversion onto the RGB average, as is the same as lighting system 1 according to Embodiment 1. Lighting controller 35 transmits, to light emitter 40, a control signal to cause light emitter 40 to emit light having a color complementary to the obtained hue. Thus, light emitter 40 emits illumination light having the color complementary to the hue obtained by color corrector 31.

As has been described above, lighting system 1A according to the present exemplary embodiment further includes, in addition to the configuration of lighting system 1 according to Embodiment 1, light emitter 40 which emits illumination light having a color complementary to the hue obtained by converting the statistics related to RGB to be used for the color correction performed by color corrector 31.

With such configuration, the surrounding color can be cancelled out, and therefore, it is possible to project video images that appear more natural and have more improved visibility than the images projected in lighting system 1 according to Embodiment 1.

### Variations

The lighting system according to the present invention has been described based on the exemplary embodiments. The present invention, however, shall not be limited to the above-described exemplary embodiments.

For example, in above-described Embodiments 1 and 2, distortion corrector 33 and luminance corrector 34 are placed in processor 30, but the locations of these correctors shall not be limited to this. Distortion corrector 33 and luminance corrector 34 may be provided in video projector 10.

In addition, in above-described Embodiments 1 and 2, although an image obtainer is placed in processor 30, the location of the image obtainer shall not be limited to this. The image obtainer may be directly placed in video projector 10, and an input video image may be directly input into video projector 10.

Moreover, above-described Embodiments 1 and 2 have described the case of using the lighting system indoors such as in a room, but the location for using the system shall not be limited to this. For example, the lighting systems according to above-described Embodiments 1 and 2 may be used outdoors.

Furthermore, above-described Embodiments 1 and 2 have described the case of using the lighting system according to each of the exemplary embodiments in bright conditions, but the lighting system may be used in dark conditions as well.

Forms obtained by various modifications to the exemplary embodiment that can be conceived by a person of skill in the art as well as forms realized by arbitrarily combining structural components and functions in the exemplary embodiment which are within the scope of the essence of the present disclosure are included in the present disclosure.

Moreover, in the above description, the configuration of each of the components in processor 30 may be a circuit. These circuits may be configured into one circuit as a whole or may be configured as different circuits. Furthermore, the respective circuits may be general or dedicated circuits.

Moreover, a computer may function as the above-described lighting system. In this case, each processing described as an operation of each of the structural components, such as above-described processor 30, used in the lighting system can be executed by the computer. For example, by the computer executing a program using hardware resources such as a processor (CPU), a memory, and an I/O circuit, each of the above-described processing is carried out. To be more specific, each processing is executed by the processor obtaining data to be processed from a memory or I/O circuit and thereby computing the data, and outputting the computing results to the memory or I/O circuit. As an example, processor 30 is a laptop PC.

Moreover, the above-described lighting system may be realized as a lighting control method. In this case, the steps in the lighting control method can be executed by a computer.

Moreover, a program for executing each of the above-described processes or steps may be stored in a non-transitory storage medium such as a computer-readable CD-ROM. In this case, a computer executes each process by reading the program from the non-transitory storage medium and executing the program. For example, the present invention may be realized as a program that causes a computer to execute the method according to the above-described lighting system or as a computer-readable storage medium in which such program is stored.

### REFERENCE MARKS IN THE DRAWINGS

- 1, 1A: lighting system
- 2: projection surface
- 10: video projector
- 20: image sensor
- 31: color corrector
- 33: distortion corrector
- 34: luminance corrector
- 40: light emitter

## Claims

1. A lighting system comprising:
a video projector which projects a video image on a projection surface;
an image sensor which defines a region including the projection surface, as an image capture region, and captures an image of the image capture region; and
a color corrector which performs color correction of the video image to be projected by the video projector, using statistics related to RGB of a target region based on the image captured by the image sensor, the target region being at least a part of the image capture region.

2. The lighting system according to claim 1,
wherein the color corrector defines a region, in the image capture region, excluding the projection surface on which the video image is projected, as the target region, and performs the color correction of the video image to be projected by the video projector.

3. The lighting system according to claim 1,
wherein the color corrector defines a region of a specified range in the image capture region, as the target region, and performs the color correction of the video image to be projected by the video projector.

4. The lighting system according to claim 1,
wherein the color corrector compares the statistics related to RGB in the image capture region between the projection surface and a region excluding the projection surface, and performs the color correction of the video image to be projected by the video projector.

5. The lighting system according to claim 1,
wherein the color corrector (i) divides the image capture region into a plurality of small regions, (ii) calculates the statistics related to RGB of the target region by weighting the plurality of small regions in an order starting from the small regions close to the projection surface towards the small regions distant from the projection surface, and (iii) performs the color correction of the video image to be projected by the video projector, using the statistics calculated.

6. The lighting system according to claim 1,
wherein the color corrector divides the image capture region into a plurality of small regions, and performs the color correction of the video image to be projected by the video projector, using a maximum cluster obtained by cluster analysis based on the statistics related to RGB of each of the plurality of small regions.

7. The lighting system according to any one of claims 1 to 6, further comprising:
a light emitter which emits illumination light using a light source different from a light source of the video projector,
wherein the light emitter emits illumination light having a color complementary to a hue obtained by converting the statistics related to RGB to be used for the color correction.

8. The lighting system according to any one of claims 1 to 7, further comprising:
a distortion corrector which corrects distortion of a video image to be projected; and
a luminance corrector which corrects luminance of the video image to be projected.

9. A program for causing a computer to function as the lighting system according to any one of claims 1 to 8.
